(19) Europäisches Patentamt / European Patent Office / Office européen des brevets

(11) **EP 3 070 873 A1**

(12) **EUROPEAN PATENT APPLICATION**

(43) Date of publication:
**21.09.2016 Bulletin 2016/38**

(51) Int Cl.:
**H04L 5/04** (2006.01)  H04B 5/00 (2006.01)

(21) Application number: **16160445.9**

(22) Date of filing: **15.03.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.03.2015 IT MI20150401**
**17.03.2015 IT MI20150404**

(71) Applicant: **Twist Off S.R.L.**
**35129 Padova (IT)**

(72) Inventors:
• **TAMBURINI, Fabrizio**
**35129 PADOVA (IT)**
• **ROMANATO, Filippo**
**35129 PADOVA (IT)**

• **MARI, Elettra**
**35129 PADOVA (IT)**
• **SOMEDA, Carlo Giacomo**
**35129 PADOVA (IT)**
• **PARISI, Giuseppe**
**35129 PADOVA (IT)**
• **OLDONI, Matteo**
**35129 PADOVA (IT)**
• **SPINELLO, Fabio**
**35129 PADOVA (IT)**
• **COASSINI, Piero**
**35129 PADOVA (IT)**
• **RAVANELLI, Roberto Antonio**
**35129 PADOVA (IT)**

(74) Representative: **Raimondi, Margherita et al**
**Dott. Ing. Prof. Alfredo Raimondi S.r.l.,**
**Piazzale le Cadorna, 15**
**20123 Milano (IT)**

(54) **SECURE SHORT-RANGE RADIO COMMUNICATION DEVICE, SYSTEM AND METHOD**

(57) Device for secure short-range point-to-point radiocommunication, comprising:
- first transceiver means for transmission and/or reception of a first EM beam with a non-zero Orbital Angular Momentum OAM value ($l_{10}$);
- additional transceiver means (1120;2120;3120,3130;4120,4130) for transmission and/or reception of at least one additional EM beam which is co-polar and isofrequential with the first beam that can be generated by the first means and with value ($l_{20};l_{30}$) of the topological charge of the OAM different from the OAM topological charge value ($l_{10}$) of the beam transmittable and/or receivable by the first transceiver means,
a first and a second data channel being associated with a respective carrier comprising said first and said at least second EM beam, respectively,
thereby forming a high-security physical substrate preventing interception of the radiocommunication information content;
wherein the device is included:
- in a security card or
- in a reader device for a security card, or
- in a portable multimedia device, or in a reader for such a multimedia device.

EP 3 070 873 A1

**Fig.3**

●  : $I_{10} = 1$
■  : $I_{20} = 0$

**Fig.4**

●  : $I_{10} = 1 \longrightarrow C_1$
■  : $I_{20} = 0 \longrightarrow C_2$

**Description**

The invention relates to a device and a short-range secure radiocommunication system, and to a secure radio communication method that uses such a device.

It is known, in the technical field of short-range near filed communication (NFC) wireless transmissions, that the same are used for a wide variety of operations.

For example, in the field of financial transactions there is a growing desire to implement payment devices that allow payment through the exchange of payment information via radio between a security data device carrier and a corresponding reader with POS functionality.

Examples of devices that use such communications are data carriers, such as ID cards, ID badges, credit cards, ATM cards and similar; there are more and more used in various services sectors, but also in companies, in order to keep data (especially sensitive data) to be transmitted via radio, by establishing a short-range connection with respective receiver devices (such as card readers, POS with wireless/contactless technology and similar).

Similar considerations apply to the technical field of smartphones, which implement transceiver technologies in the field of proximity (NFC) which allow the exchange of data with similar devices, and even to carry out financial transactions and/or identification by communicating via radio with reader devices via NFC connection.

It is also known that all short-range transceiver technologies used today for these purposes are deemed unsafe and for this reason are greatly limited in possible uses; consider, for example, the very stringent limits imposed on the amount of financial transactions that can be performed with contactless credit cards that integrate appropriate transceiver means.

The reasons for this lack of security are manifold:

- On one hand the need to provide, for media such as credit cards or identification cards, transceiver means of contained dimensions and power (preferably passive), and which do not require complex post-processing and management circuits, features imposed, for example, by the ISO 7810 which specifies the physical properties of media such as identity cards and the like in three different sizes of card, which are indicated with ID-1, ID-2 and ID-3. ID-1 measures 85.60 mm x 53.98 mm is the most widespread, and it is used for example for ATM cards, credit cards, phone cards and EU driving licenses.
- On the other hand, said dimensional and complexity limits imposed, lead to use, for point-to-point short-range transmissions of this type of applications, of transceiver means (currently the most common are the RFID transponders for credit cards and radio transceivers NFC to smartphones) that transmit/receive electromagnetic radio standard beams, having equiphase surfaces that do not show any peculiar characteristic.

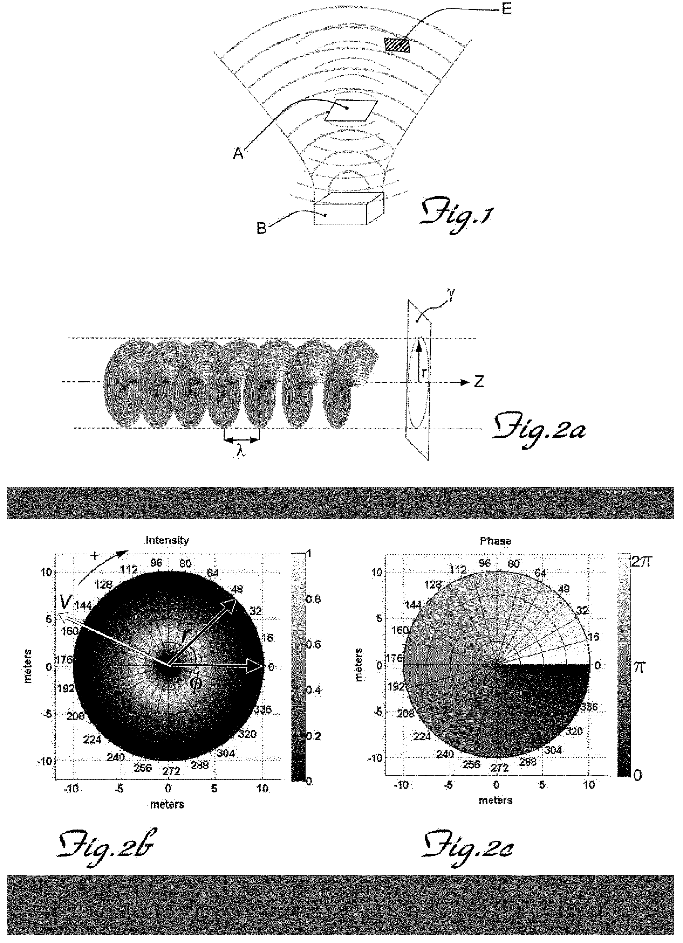

As illustrated in Figure 1, the cross-section illuminated by these beams increases with increasing distance from the transmitter, and the beams can be intercepted by any position in which a sufficient signal strength can be collected.

This implies that an eavesdropper in any position, who is able to receive a portion of the signal with sufficient power, is thereby capable of intercepting the short-range communication, and then take possession of sensitive data; for example (Figure 1) an eavesdropper E positioned behind and/or next to a user A making a contactless payment at a POS B is able to intercept sensitive data exchanged between the security data medium and the POS reader.

On the other hand increasing the number of data channels, using standards beams as carriers, does not increase security, but only the interference between channels on a same frequency, which are not independent one another; therefore, complex processing encryption mechanisms are used, requiring a high capacity for pre-and post-processing (and therefore complex and expensive circuitry difficult to implement within the dimensional limits imposed for the devices) and any way not guaranteeing security against eavesdroppers equipped with adequate capacity for post-processing the intercepted signals.

YAN YAN ET AL: "High-capacity millimetre-wave communications with orbital angular momentum multiplexing" (NATURE COMMUNICATIONS, vol. 5, 2014-09-16, p. 4876), discloses a bidirectional link between two data centers equipped with means for transmission/reception of superimposed co-polar EM beams with the same frequency and with different values of the Orbital Angular Momentum (OAM) topological charge, wherein different data channels are associated with respective carriers comprising EM Beams with value of the OAM topological charge different from zero and one from the other.

WO 2014/104911 discloses generating beams with value of the OAM topological charge different from zero by means of circular arrays of antennae.

US 7 701 381 B2 describes a system and method of OAM diverse signal processing using classical beams for applications in which OAM signal character is controlled such as optical tagging and applications in which OAM signal character is not controlled such as clutter mitigation and interference cancellation for target detection, identification etc. This is accomplished by transmitting a source beam having a prescribed state with one or more non-zero OAM components, reflecting the beam off a 'tagged' or 'untagged' target and receiving the return beam in the direct return path to measure the one or more OAM components to identify the target. According to US 7 701 381 B2, OAM processing provides additional degrees of processing freedom to enhance the processing capabilities to detect and identify both 'tagged' and 'untagged' targets. The target may be an RF or Optical OAM tag comprising a grating or a hologram, respectively, for reflecting and/or diffracting the transmitted beam towards the receiver. The reflective/diffractive hologram or grating may be incorporated in a credit card. The proposed diffractive grating cannot be made to fit in the size of a credit card at frequencies substantially lower than 100 GHz.

The technical problem which is posed, therefore, is that of providing telecommunication methods, devices and systems for short-range transmission, which can ensure improved security of data exchanged by reducing the possibility of eavesdropping by third parties, as well as short-range telecommunications devices and systems that implement this method.

In connection with this problem it is particularly desirable to restrict the area in which an eavesdropper is able to intercept and discriminate the signals exchanged between the transceivers that communicate via short-range transmissions.

It is also required that the new solution be suitable to be carried out in a simple and economical way, using technical production in current use and without departing from the dimensional requirements imposed by international standards for the different devices.

These results are obtained according to the present invention by a device according to claim 1, by a system according to claim 11 and by a method according to claim 13. Preferred embodiments are described in the dependent claims.

Further details may be obtained from the following description of non-limiting examples of embodiment of the subject matter of the present invention provided with reference to accompanying drawings in which:

> in Figure 1: a schematic illustration of principle of a short range radio transmission intercept able by an eavesdropper according the current state of the art;
>
> Figure 2a: shows a schematic illustration of a monochromatic beam with non-zero Orbital Angular Momentum (OAM), inserted in a cylindrical coordinates reference system;
>
> Figure 2b: shows a schematic illustration of the beam of Figure 2a projected on a plane $\gamma$ perpendicular to the direction of propagation z of the beam;
>
> in Figure 2c: a graphic illustration of the projection of the phase profile of the beam mechanisms of figure 2a on a plane $\gamma$ perpendicular to the direction of propagation z;
>
> in Figure 3: a schematic view of a first embodiment of a device for secure communication according to the invention;
>
> in Figure 4: a schematic perspective view of a first example of embodiment of a system for secure short-range radio communication according to the invention, comprising the security device of Figure 3;
>
> in Figure 5: a schematic perspective view of a second example of embodiment of a system for secure short-range radio communication according to the invention in figure 6a, 6b: exemplary graphs that indicate the variation of Signal to Noise Plus Interference Ratio (SNIR), respectively, upon variation of the inclination angle of the receiver with respect to the correct alignment, and upon variation of the receiver translation/offset with respect to the position of ideal alignment;
>
> in figure 7 and 8: examples of results of comparative studies to assess regions of space in which an eavesdropper is able to successfully intercept a useful signal transmitted by devices according to the invention and according to the prior art. With reference to Figure 2a, the orbital angular momentum (OAM) is a fundamental physical property of the electromagnetic field (EM) which univocally characterizes a rotation of the wavefront (i.e. of the locus of equiphase points of the field of an electromagnetic wave or beam), centered on the axis along which the wave propagates.

In particular, Orbital Angular Momentum is currently understood as meaning the number of complete rotations (i.e. 360 degrees) performed by the phase of the field on a plane $\gamma$ transverse to the direction of propagation of the wavefront when the coordinate azimuth, $\phi$, completes a 360 degrees rotation. It is a quantity also known as OAM topological charge.

The term "beam" indicates a set of paraxial waves, i.e. waves which have directions of propagation which diverge only slightly from the direction, z, along which the entire beam is propagated. Said beam is monochromatic (the waves forming the beam are sinusoids with the same frequency) and coherent (said sinusoids have phases in a deterministic relationship with each other).

Electromagnetic beams with non-zero orbital angular momentum are characterized by the presence of a singularity, where at the contributions of the EM field with different phases interfere destructively so that the beam intensity is substantially zero and the phase is indeterminate.

The simplest case, widely described in the literature, of an EM field in a "pure" OAM state (or mode), i.e. one characterized by a unique integer value of its Orbital Angular Momentum, is known in the literature as Laguerre-Gaussian (LG) beam. The pure LG states or modes are paraxial beams obtained by appropriate superposition of plane waves, characterized by the presence of a central phase singularity. The intensity distribution of a generic pure LG mode presents a rotational symmetry about its axis of propagation z and is characterized by two integer indexes, $l$ e $p$:

$l$ is the azimuthal index, also called OAM topological charge or, generically, value of OAM, and it univocally defines the angular dependence of the phase of the field. It indicates the number of interlaced helices that make up the wave front. These helices have a pitch equal to the wavelength $\lambda$;

$p$ is the radial index: it represents the number of radial nodes of the LG beam, i.e. the number of points (at a finite distance from the centre) at which the field is zeroed. This is equivalent to saying that p+1 is the number of relative maximums (alternately, positive and negative) of the field amplitude, succeeding each other along the radial direction, starting from the central singularity in which the origin of the coordinates, r = 0, is placed.

The complex amplitude of the field of a LG beam in cylindrical coordinates (r, $\phi$, z) is described by

$$\mu_p^l(r,\phi,z) = \alpha_k \sqrt{\frac{2p!}{\pi(|l|+p)}} \frac{1}{w} \left(\frac{\sqrt{2}r}{w}\right)^{|l|} \exp\left(-\frac{r^2}{w^2}\right) \exp\left(i(2p+|l|+1)\arctan\left(\frac{z}{z_R}\right)\right) \exp(-il\phi) \exp\left(i\left(kz - \frac{kr^2}{2R}\right)\right) L_p^{|l|}\left(2\frac{r^2}{w^2}\right)$$

with $w = w_0 \sqrt{1 + (z/z_R)^2}$, where $\omega_0$ is the beam waist radius, R the radius of curvature of the wavefront, $zR$ the so-called Rayleigh distance (Rayleigh range), $L_p^{|l|}(2r^2/w^2)$ the associated Laguerre polynomial and $(2p+|l|+1)\arctan(z/z_R)$ the so-called Guoy phase. The term $\exp(-il\phi)$ describes the azimuthal dependence of the phase.

The LG beams with integer and non-zero OAM present an intensity distribution characterized by a donut shape: the maximum intensity falls within an annular region, in the center of which, the intensity of the electromagnetic field is zero (Figure 2b). The radial dimension of the region with substantially zero intensity is proportional to the square root of the topological charge.

The module and sign of the OAM topological charge (or azimuthal index) $l$ can be schematically represented, respectively, by the number of rotations of a suitable vector V around the z axis and by the direction of rotation -clockwise or counterclockwise- of the vector on a generic plan $\gamma$ perpendicular to the propagation direction z, when the z coordinate increases by a wavelength $\lambda$ (Figure 2b).

Moreover the EM field of an LG beam with non-zero Orbital Angular Momentum has, in a generic observation plane perpendicular to the axis of propagation, a phase which is variable with continuity upon variation of the angular coordinate in the plane itself; this means that it has a well-defined and unique periodic spatial structure called "phase profile" which, if measured, may be used for discriminating wave beams with different OAM.

Beams with the same carrier frequency, having same polarization (for brevity hereinafter called co-polar) and substantially coaxial, characterized by different values of OAM, are orthogonal, and so independent of each other; as a consequence, they remain intrinsically separated from each other during propagation and therefore they can be exploited as carriers for independent channels in radio communication. The expression "data transmission channel" (or in short "data channel") is used here to indicate any signal which carries information, without any limitation as to the type of said information or the technology used for the (analog or digital) generation/encoding thereof and for its transmission (modulation method).

However, during propagation, the transverse section of a beam with nonzero OAM widens (diverges) with increasing distance from the source and in proportion to the value $l$ of the topological charge; it follows that the transverse dimensions of the central "dark area" in the intensity distribution of the beam increase with the distance from the source.

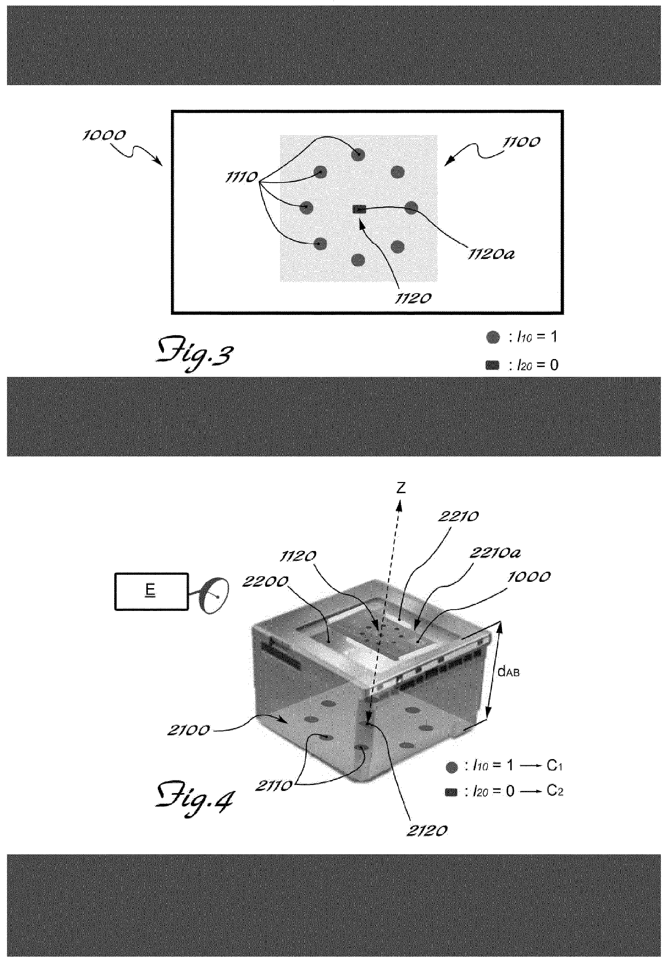

With reference to Figure 3, a first example of embodiment of a device 1000 for short-range secure communication according to the invention is represented. The device 1000 is schematically shown in the form of a security card, such as a credit or identification card, and includes:

a transceiver assembly 1100 (for example a transponder in compliance with RFID standard) comprising:

- First 1110 transceiver means for generating a first electromagnetic beam characterized by a non-zero $l_{10}$ value of the OAM topological charge; correspondingly the transceiver means 1110 are suitable also for reception of an EM beam characterized by the same OAM value $l_{10}$ of the topological charge;
- Second transceiver means 1120 for generating a second electromagnetic beam co-polar and with the same frequency (i.e. isofrequential) of the first beam generated by the first 1110 transceiver means, but characterized by an OAM with value $l_{20}$ of the topological charge different from the value $l_{10}$ of the topological charge of the beam generated by the first transceiver means 1110; correspondingly the second transceiver means 1120 are suitable also for reception of a EM beam characterized by the same value $l_{20}$ of the OAM topological charge.

In more detail, the first transceiver means 1110 of the illustrative device 1000 comprise an array of at least $2l_{10}+1$ (in the example of Figure 3 eight elements are used) radiating elements 1110 (hereinafter antennas), capable of generating an EM beam characterized by a value $l_{10}$ of the topological charge equal to one ($l_{10}= 1$). The eight antennas 1110 are equally spaced in angle along a circumference, and each of them is fed with a signal of equal amplitude, phase-shifted with respect to the signal that feeds the adjacent antenna of 360°*$l$/N, where $l$ is the transmitted/received value of OAM topological charge and N is the number of antennas of the array, in this example 360°/8=45°. Clockwise increasing phase shifts transmit/receive OAM of positive sign; counterclockwise increasing phase shifts transmit/receive OAM of negative sign.

According to the invention, the first generated/received EM beam from the first EM transceiver means 1110 is associated with a first data channel C1, by means of an appropriate system of coding and modulation.

The second transceiver means 1120 of the illustrative device 1000 comprise a single antenna 1120a disposed in central position with respect to the circumference described by the first transceiver means 1110. The antenna 1120 is arranged to generate a standard EM beam, i.e. with zero OAM ($l_{20}$=0).

The second EM beam, generated/received by the second EM transceiver means 1120, is associated with a second data channel C2, by means of an appropriate system of coding and modulation.

For example it is assumed that the antennas 1110,1120 may be active or passive radiating elements, for example planar patches or dipoles. These types of antennas allow an easy integration into a security card in accordance with required dimensional standards.

Associating a first channel C1 to an OAM beam with non-zero value of topological charge, a first advantage is obtained that consists in the fact that the difficulty of interception of the channel carried by the first beam rapidly increases with increasing distance from the device 1000 for secure communication. The portion of the $\gamma$ plan illuminated by the main lobe of the non-zero OAM beam widens, in fact, with increasing distance from the source, and thereby the central area with substantially zero intensity also increases, while the useful power remains confined solely in the crown of the intensity distribution.

Nevertheless, using only the first channel C1 associated with the first beam generated by the first transceiver means 1110, an eavesdropper in a position not correctly aligned with the beam could still intercept sufficient signal power for reconstruction of useful data signal transmitted on channel C1, since, even receiving a signal power low but above the background noise, the intercepted small portion of intensity would carry a not disturbed or interfered signal, which would thus be reconstructable.

According to the invention, the device 1000 includes therefore the second transceiver means 1120 that generate said second EM beam with the same frequency and co-polar, which is associated with a second transmission channel C2 with the aim of interfering with the first channel C1.

The innovative combination advantageously exploits the fact that, in order to exploit at the receiving side the orthogonality of the two received EM beams with different topological charge (OAM), namely to be able to receive and discriminate independent channels C1, C2 associated with the two beams generated, the received field must be completely concatenated, both in amplitude and in phase; in general terms this means that the receiving transceiver means must be able to receive a sufficient portion of the EM field surrounding the beam singularity.

To achieve this concatenation, a receiver must be:

- substantially aligned with the transmitter;
- at an appropriate distance from the transmitter.

A condition of substantial alignment at a suitable distance is that wherein the receiving transceiver means are arranged:

- on a plane substantially perpendicular to the transmitted beam propagation direction z, that passes through the central minimum of the intensity of the field, and
- in the proximity of the maximum power of the field, namely in the proximity of the annular region where the intensity of the field (that is maximum along the circumference of radius $r_{max} = w\sqrt{\ell / 2}$) is concentrated.

These two conditions restrict the ability of an eavesdropper to receive and correctly discriminate the information carried on channels C1, C2 associated with the co-polar and the same frequency beams characterized by different OAM, transmitted or received by transceiver means 1110, 1120. These beams, according to the invention, are advantageously used as carriers for data channels C1, C2 for short-range secure communications, whereby a legitimate receiver can easily meet the above conditions, while a fraudulent eavesdropper encounters major difficulties not being able to align itself with nor place itself at a suitable distance from the transceiver, a position in which it would be in any case easily detected.

In this way, the invention advantageously exploits also the fact that the beams with non-zero OAM have a spread (divergence/beam aperture during the propagation) higher than a standard beam, at equal distance of propagation. The simplest example of exploitation of the two channels C1, C2 associated to the transceiver means 1110,1120 described above is to transmit a single useful signal S1 carried by channel C1 with a non-zero OAM, while on the other channel C2 (in this example, $l_{20}=0$) a distributing signal with power equal to the useful signal S1 can be transmitted.

A possible eavesdropper can not, in its position, concatenate the whole beam with non-zero OAM delivered by the first channel C1 generated by transceiver 1100, it can not exploit in reception the phase variation around the singularity of the beam with non-zero $l_{10}$ OAM to discriminate the first channel C1 from the second co-polar channel C2 with the same frequency. The eavesdropper receives only a portion of the useful signal (therefore it receives less power) and it is also disturbed by the disturbance signal transmitted on channel C2 ($l_{20}=0$), which is received superimposed and interfering with the first useful signal on the channel C1 and, not being able to exploit the orthogonality of the different OAM modes, can not be isolated from the first channel C1 itself.

This embodiment, which envisages the presence of a disturbance signal transmitted on the second channel C2, while meeting the basic requirement of security, implies a waste of power (the power of the disturbance signal), which is not reused in any way for transmission of useful data.

According to a further preferred aspect of the invention useful data signals Si (i = 1,2, ...) to be transmitted on channels C1, C2 of the secure communication device 1000 according to the invention are divided between the two channels. For example, if only one useful signal S1 is transmitted, this may be divided at least into two parts, each of which is transmitted on one of the two channels C1, C2. If two or more useful signals S1, S2 are transmitted, these can be divided into the two channels so that each channel C1, C2 transport a composite plot (of parts) of the useful signals S1, S2. In this way an additional level of security is added, since it is necessary to receive and correctly discriminate all the channels C1, C2 to reconstruct the one or more useful signals S1, S2, and no power is wasted in the transmission.

In figure 4 it is shown the secure communication device 1000 of Figure 3 placed, in the assumed example, on a complementary secure communication device 2000, in the form of a reader 2000 for security cards such as credit or identification cards.

Correspondingly to secure communication device 1000, the device 2000 includes a transceiver assembly 2100 comprising:

- First transceiver means 2110 for generation/reception of a first electromagnetic beam characterized by non-zero $l_{10}$ value of the OAM topological charge and corresponding to the OAM value $l_{10}$ of a beam generable/receivable by the first transceiver means 1110 of device 1000; transceiver means 2110 are also suitable for the reception of a EM beam characterized by the same value $l_{10}$ of OAM topological charge;
- Second transceiver means 2120 for generating/receiving a second electromagnetic beam characterized by an OAM with value $l_{20}$ of the topological charge different from the value $l_{10}$ of beam generated/receivable by the first transceiver means 2110 and equal to the OAM value generated/receivable by second transceiver means 1120 of the device 1000; transceiver means 2120 are also suitable for reception of a corresponding EM beam characterized by the same value $l_{20}$ of OAM topological charge.

In this example it is assumed that the transceiver means of a reader device 2000 for secure communication are subjected to dimensional constraints less strict than those required for the device 1000 in the form of security card, for example contained in a circumference of radius between 40 and 70mm, while for a device such as a security card 1000 one can assume a circumference between 20 and 35mm in radius.

The antennas of the reader device 2000 can then be implemented for example with arrays of patches, dipoles or coils, possibly coupled with adequate processing means, subject to limitations less stringent than those imposed for a device security card.

A proper configuration of the reader device can thus easily allow also the use of passive elements for the device 1000 in the form of a security card, and preferably the implementation of a minimal pre- or post-processing in security cards, such as a static post-processing preferably implemented with properly dimensioned transmission lines (e.g. microstrip wave guides) that allow the elements of the array to have the corrected phase shifts for transmit and/or receive the predetermined value of OAM.

In the example of Figure 4, the reader device includes a plate 2200 transparent to radio waves and spaced from transceiver 2110,2120 means of a proper distance $d_{AB}$ in the direction of propagation z of the beams generated by the assembly 2100.

The distance $d_{AB}$ is preferably greater than a minimum distance $d_{AB-min}$ such that the beams with non-zero OAM can develop completely (with donut-shaped intensity distribution and well-defined phase profile), in some cases identified as substantially equal to or slightly greater than the wavelength; for example for a transceiver with dimensions of the order of centimeters, operating at a transmission frequency of 5.8GHz, typical of RFID applications, a distance $d_{AB-min}$ of a few centimeters is sufficient.

The upper limit of the distance $d_{AB-min}$ depends on various factors, for example on the power of the signal radiated by the transceiver means 1100,2100 of the secure communication devices 1000,2000, on the working frequency, on the size of the transceiver means of both devices 1000, 2000, and on the value of the generated OAM, that affects the enlargement of the antenna lobe, as well as on the signal degradation limits imposed for a correct reception by the devices 1000,2000 (which in turn depend on several parameters such as the post-processing capability). A proper selection of various parameters is within the reach of the designer that implements the different system configurations.

An optimal distance $d_{AB}$, so preferred, can be one in which the receiving means, if in a position of substantial alignment, are substantially disposed within or around the ring of maximum intensity of the intensity distribution of the OAM beam, preferably placed along the circumference of radius $r_{max} = w\sqrt{\ell/2}$ .

Preferably the plate 2200 transparent to radio waves is placed at the optimal distance $d_{AB}$ from the radio assembly 2100.

The plate 2200 transparent to radio waves includes means adapted to facilitate alignment between the transceiver means 1110 for transmitting/receiving the OAM beam with non-zero topological charge of device 1000 and the corresponding transceiver means 2110 of the reader device 2000.

An advantageous aspect of the invention is that determining the point of proper alignment between the two devices is facilitated by the structure of the non-zero OAM beams: thanks to the minimum intensity of the signal located in the center of the antenna lobe radiated by the transceiver means 2110 of the reader device (or by transceiver means 1110 of the security card device 1000) it is simple to configure means for correct alignment between the secure communication devices 1000,2000, for example aligning the respective minimum points of signal intensity.

In the exemplary embodiment shown in Figure 4, the means for easy alignment of the reader device 2000 are in the form of shaped elements 2210 in relief adapted to define an housing seat 2210a substantially sized to the security card device 1000; the housing seat 2210a is properly arranged in the position of correct alignment between the two devices 1000,2000, identified for example thanks to the respective minimum signal intensity of the beams with non-zero OAM, as described above.

With this configuration, the operation of the secure communication system between the security card device 1000 and the reader device 2000 is the following:

- The legitimate receiver B owner of the security card 1000 places the card in the seat 2210a, in a position of alignment of the respective transceiver assemblies 1100,2100 for correct transmission and reception of the beams EM with non-zero OAM;
- The reader device 2000 transmits a useful signal S1 properly divided on the two channels C1, C2 to the security card device 1000 of the receiver B;
- The legitimate receiver B has the transceiver 1110,1120 means required to receive both channels C1, C2 on which the useful signal S1 is carried and, being in a position of proper alignment at proper distance with respect to the reader device 2000, it can take advantage of the orthogonality of the beams with different OAM values and of the independence of channels C1, C2 associated therewith, being able to receive and correctly discriminate the channels without being affected by the mutual interference between the beams;
- after having received and correctly discriminated the two channels C1, C2, the device 1000 of the legitimate receiver B can properly reconstruct the useful signal S1 divided on the channels C1, C2 and it can establish a secure communication with the device 2000;
- The two devices 1000,2000 are therefore able to communicate in a secure way on the two channels C1, C2 by means of suitable conventional communication protocols.

A possible fraudulent eavesdropper E, which for illustrative purposes is supposed equipped with correct transceiver E100 means (for example of a reader equal to the reader 2000) adapted to receive the beams generated by means 1100,2100 of the secure communication devices 1000, 2000, and with a very high post-processing capability of the received signals, is not however able to receive and discriminate the two channels C1, C2 of communication between the devices 1000,2000 beyond a certain angular misalignment limit and/or over a certain lateral translation/offset limit relative to the position of correct alignment, because he can not obtain the orthogonality condition between the two channels.

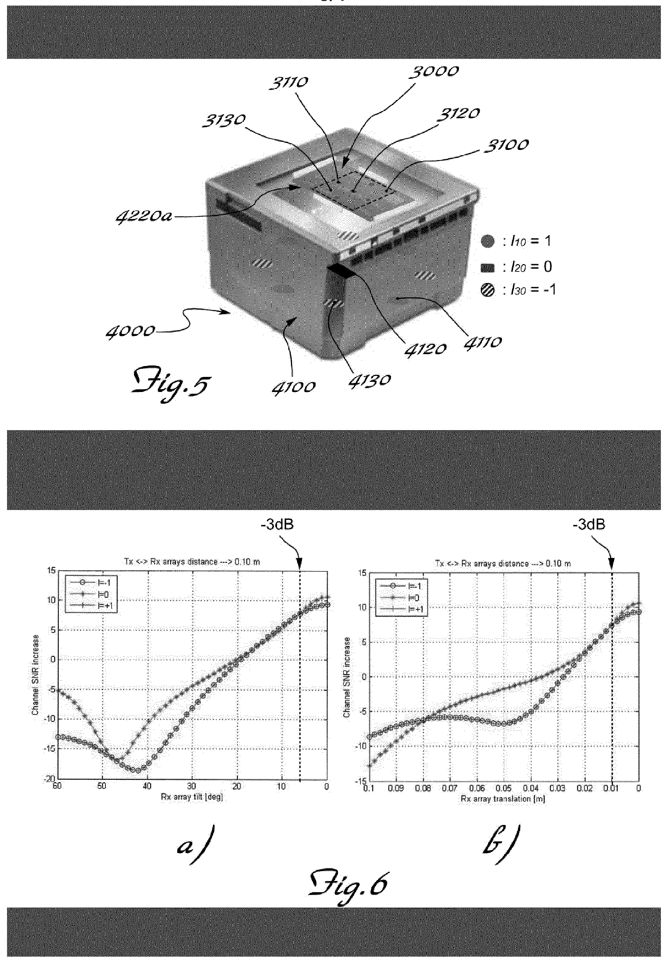

Figure 5 shows a second example of embodiment, of a system for short-range secure communication according to the invention, which similarly to the system of Figure 4 comprises a first secure communication device 3000, shown schematically in the form of a security card placed on a complementary secure communication device 4000, in a correspondent housing seat 4210a properly positioned in the position of correct alignment between the two devices 3000, 4000.

Security card device 3000 differs from the device 1000 in that it includes third transceivers means 3130 for generating a third EM beam characterized by an OAM with non-zero value $l_{30}$ (in the example $l_{30}$ = -1) of the topological charge and different from the OAM values $l_{10}$, $l_{20}$ of topological charge of the beams generated by the first 3110 and second 3120 transceiver means; the third transceiver means 3130 are correspondingly suitable for reception of an EM beam characterized by the same value $l_{30}$ of OAM topological charge of the transmitted signal.

The reader device 4000 includes similar third transceiver 4130 means capable of generating and receiving an EM beam the same value $l_{30}$ of OAM. EM beams transmitted/received by the third transceiver 3130,4130 means are associated to a third secure short range telecommunications channel C3.

The first transceiver means 3110,4110 and the third transceiver means 3130,4130 are implemented by two concentric circular arrays of patch antennas working for example at a frequency of 5.8 GHz (typical RFID standard). The size of the transceiver assembly 4100 of reader device 4000 can be chosen substantially equal to the received/transmitted wavelength (about 50 mm), in order to reduce the secondary lobes, and better focus the power in a main lobe of irradiation of the assembly 4100.

The operating principle of the secure communication system of Figure 5 is similar to that of the system of Figure 4, but the at least one useful signal S1 is divided on three communication channels C1, C2, C3; it is therefore even more difficult to intercept at least one useful signal S1, because it is necessary to receive a sufficient signal power for all three co-polar channels, that have the same frequency and are transmitted at the same time.

Figures 6a,6b show two illustrative graphs that indicate the variations in Signal to Noise Plus Interference Ratio (SNIR) for each of the three channels C1,C2,C3 associated with the corresponding EM beams at different OAM $l_{10}$,$l_{20}$,$l_{30}$ received from a receiver B having the security card device 3000 placed at a correct distance $d_{AB}$ and equal to 100mm (maintaining the conventions assumed for

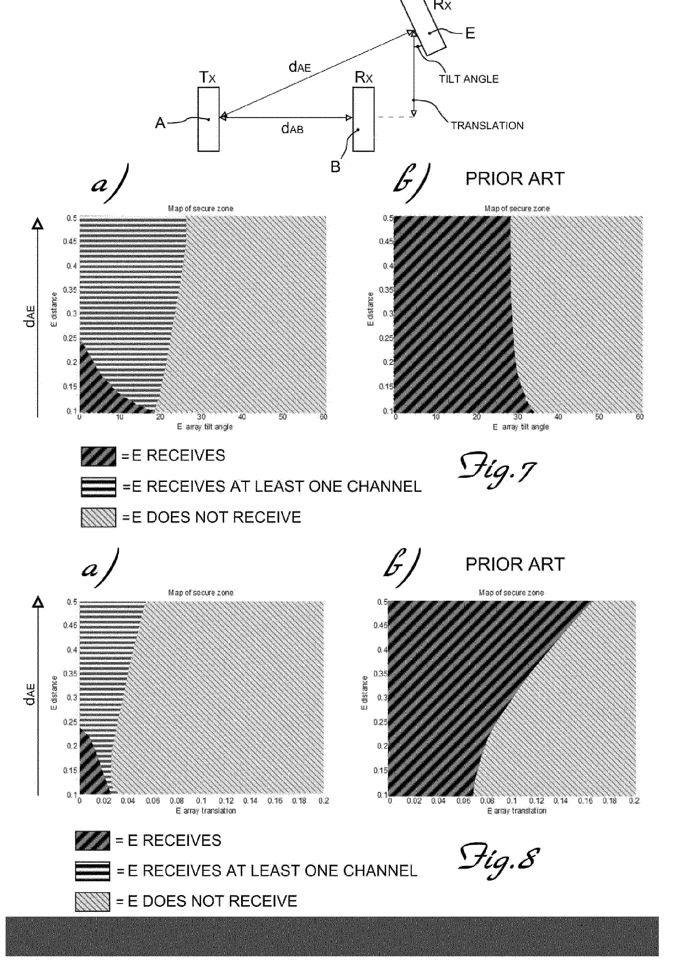

Figure 4 and with further reference to the diagram of Figure 7). In Figure 6a there is shown the variation of SNIR upon varying the angle of inclination (tilt) with respect to the correct alignment, while in Figure 6b there is shown the variation of SNIR as function of the offset (lateral displacement, perpendicular to the z axis) with respect to the position of ideal alignment.

For illustrative purposes, it is assumed that the legitimate receiver B, with limited post-processing capability, is not able to properly receive the channels C1,C2,C3 below a threshold value equal to -3dB compared to the maximum SNIR, and that it must also receive the three channels C1,C2,C3 with the same SNIR in order to be able to properly equalize in reception and thereby reconstruct the at least one useful signal S1 divided on the three channels. With these assumptions, it can be seen in Figures 6a,6b that a legitimate receiver B, placed at a proper distance, can correctly receive (dotted line) the three channels C1,C2,C3, even if it is not perfectly aligned (within 10° of tilting and/or within 1cm offset from the ideal alignment position), even assuming extremely stringent conditions on the correct reception of the channels.

Figures 7 and 8 show the results of some comparative studies performed to evaluate the regions of space in which a fraudulent eavesdropper E is able to successfully intercept a useful signal S1 transmitted from an entity A in possession of the device 4000 to a legitimate receiver B owner of the security card device 1000 properly set in a position of proper alignment and distance.

The eavesdropper E is assumed, for the purposes of these studies, equipped with receiving means adapted for correct reception of the three channels C1,C2,C3 associated with the three EM beams with different OAM value transmitted by the device 4000, and with a substantially unlimited post-processing capability of the intercepted signals, which allows the eavesdropper E to be able to reconstruct the useful signal S1 even if it receives the three channels C1, C2, C3 with a badly deteriorated SNIR, assumed to be equal to -10dB with respect to the SNIR received by the legitimate receiver B located in an optimal position.

However, the fraudulent eavesdropper E, not being able to be aligned in the correct position with the device 4000 of entity A, is in a tilted orientation and/or in a shifted position with respect to the ideal position occupied by the device 3000 of legitimate receiver B. The angle of inclination (=tilt) and the distance (=offset) of the eavesdropper E from the axis of optimal alignment of the device determine the inability of E to independently receive the three channels associated with beams with different OAM value, so the region of the surrounding space B in which E is able to receive sufficient signal over all three channels C1, C2, C3 results therefore extremely narrow.

The OAM channels received from translated and/or inclined positions with respect to the ideal position, occupied by B, are not received as orthogonal, and even if they were received with a sufficient SNIR, the eavesdropper would need a very high and non-plausible post-processing capability distinguish them to, which he is awarded in the examples only for purposes of illustration.

Figure 7a shows the regions of space in which, upon varying the distance $d_{AE}$ between A and E and the tilt angle of E with respect to the ideal alignment, E is able to receive:

- No channel C1, C2, C3 with a variation of SNIR greater than -10dB (light zone on the right),
- At least one channel C1, C2, C3 with a variation of SNIR greater than -10dB (area with horizontal stripes),

- All three channels C1, C2, C3 with a variation of SNIR greater than -10dB, and whereby E can reconstruct the useful signal S1 divided thereon thanks to its post-processing capability (dark area with oblique lines on the left).

Figure 7b shows the comparison with an example of embodiment according to the prior art that uses a channel transmitted on standard radio waves (with the null OAM).

Figure 8a shows the regions of space in which, upon varying the distance $d_{AE}$ between A and E and the translation/offset of E with respect to the ideal alignment, E is able to receive:

- No channel C1, C2, C3 with a variation of SNIR greater than -10dB, (light zone on the right)
- At least one channel C1, C2, C3 with a variation of SNIR greater than -10dB, (area with horizontal stripes)
- All three channels C1, C2, C3 with a variation of SNIR greater than -10dB, and thereby E can reconstruct the useful signal S1 divided thereon thanks to its post-processing capability (dark area with oblique lines on the left).

Figure 8b shows (with the same graphic coding) an example of the embodiment according to the prior art that uses a channel transmitted on standard radio waves (OAM zero) and it shows an area of possible interception that is much greater than that determined by the transmission according to the present invention.

It is therefore clear that the use of communication channels associated with at least two EM beams with different orbital angular momentum value to implement a secure short-range communication guarantees an extremely narrow region of space within which it is possible to properly receive channels, and outside of which the reception becomes very difficult for a possible fraudulent eavesdropper.

According to a preferred embodiment, transceiver assemblies 1100, 3100 of the secure communication devices 1000,3000, for example the security cards of Figures 4,5, comprise or consist of passive antennas, and it is expected that the passive antennas are adapted to be activated and to "react" to the transmitter (for example, the reader 2000,4000) only if they receive signal of equal power on all the channels C1, C2, C3 (and/or equal values of SNIR). In this way a further level of security is added for which a possible eavesdropper E provided with transmission means can not activate the passive antennas of the receiver, unless he is in a position of proper alignment which allows all channels to arrive at the receiver with the same signal power (or with the same SNIR).

A further embodiment provides instead the use of not identical signal power on all channels.

Moreover complementary transmitting devices, for example the security card reader devices, adapted for transmitting signals with equal power may be provided. However, it is preferable that complementary transmitting devices transmit signals with different power levels, which allows greater versatility in the sizing of the transceiver assembly and corresponding radiating elements.

In addition a preferred embodiment provides that the devices establish a communication only if they receive equal SNIR on all channels; in this case it is possible to compensate any differences of SNIR on the different reception channels with different transmitted signal powers.

To satisfy the preferred condition of reception of signals with equal SNIR by the transceiver means 1110 and 1120, it is therefore possible to especially dimension the transceiver 1100 set in reception if the transceivers means 2110 and 2120 transmit signals with equal power; however it is preferable to adjust different transmission powers of the transceiver means 2110,2120 to a preferred sizing of transceiver means 1110,1120 f the first device.

Further advantageous aspect of the present invention is that the use of beams with different value of OAM allows a strong simplification of the post-processing of the signals needed by secure communication devices, such as security cards 1000,3000. The post-processing can be of the static kind and needs not be dynamically re-calibrated depending on the position of the receiver. An advantageously simple post-processing, for example static, can be implemented with properly dimensioned transmission lines (e.g. microstrips) connected to the antennas of the transceiver assembly.

According to a further preferred embodiment, a secure communication device according to the invention can be implemented in the form of a portable multimedia device, such as a smartphone, tablet or similar.

The multimedia device will incorporate a transceiver assembly, for example implemented by means of antenna arrays, capable of transmitting/receiving at least two beams with different value of OAM topological charge, and associate corresponding secure transmission channels Ci thereto.

Advantageously, this embodiment allows to have portable multimedia devices able to carry out financial transactions or exchange of secure data with great versatility.

In addition, such a device may be arranged to carry out in a very simple way the alignment to a reader device or to a corresponding second multimedia device with which to securely exchange data at short-range: for example, an application can be programmed in order to detect, for example through the transceiver means of the device, a minimum of intensity of the signal received on one or more channels carried by beams with non-zero OAM and indicate the correct alignment position with the complementary reader/multimedia device. The alignment based on a minimum of power as reference is advantageously simpler than that using a maximum. This renders unnecessary the presence of alignment means on the reader device. A graphical interface of the application can easily help the user to achieve the proper alignment.

The size of smartphones or similar devices implies less stringent limits on the size of the transceiver assembly, and allows insertion of a greater number of radiating elements, which allows to more easily generate/receive EM beams with high values (for example, $l$=10) of OAM topological charge; it is in fact known that the minimum number of antennas needed to form an array of antennas able to generate a beam with OAM of value $l$ is equal to 2l+1 (antennas). Higher values of OAM are more difficult to intercept because the divergence/opening of an OAM beam is proportional to the square root of the value of the OAM of the beam, which diverges more quickly with the increasing value of OAM, decreasing the area where it is possible to intercept the radio communication.

A high number of channels (for example, greater than two or three) associated to carriers with different OAM sinergically enables both an increase of capacity and an increase of security, obtained thanks to the subdivision of the useful signal on multiple channels, as well as the greater difficulty of interception. The best compromise between the various parameters and requirements may be selected by the designer.

With a dynamic post-processing, for example with phase-shift lines connected to configurable phase shifters, it is possible to vary the configuration of the antenna array to transmit/receive beams with different values of topological charge of OAM, subject to the minimum number of antennas given by 2l+ 1. The devices of the present invention can therefore implement a short-range radio communication method in which security of the communication is obtained using at least two co-polar data channels with same frequency, whose respective carriers comprise (or consist of) a first EM beam with non-zero orbital angular momentum (OAM) and at least one second EM beam with OAM different - even zero - from the OAM of the first beam.

The radio communication for example can be a transmission, a reception or a mono or bi-directional point-to-point radio communication.

In fact it is clear that, although the invention has been described with reference to preferred transceiver means capable of transmitting and receiving the beams with different OAM transmission channels carrying the Ci, it is not necessary that the radio communication is bi-directional (or full-duplex) and that for certain protocols and applications it may be advantageous that the transmitter means are not adapted for reception and/or viceversa.

In addition it is meant that the said beams are preferably substantially coaxial. A preferred aspect of the method according to the invention provides for realizing a point-to-point short-range radio communication between two secure communication devices, in which each EM beam with different value of OAM transmittable/receivable by one of the secure communication devices is associated with a corresponding secure channel data of the radio communication.

In more detail, an exemplary method of realization of a point-to-point short-range radio communication according to the invention preferably comprises the steps of:

-) arrangement of a first and a second short-range secure communication device, each comprising:

- First transceiver means suitable for transmission and/or reception of an electromagnetic beam with non-zero OAM value $l_{10}$ of the topological charge;
- Further transceiver means suitable for transmission and/or reception of at least one further electromagnetic beam co-polar and with the same frequency to the beam generated by the first means 1110, but with value $l_{20}, l_{30}$ of the OAM topological charge different from the value $l_{10}$ of the transmitted/receivable by the first transceiver means 1110;

-) Associating a communication channel C1 to a first carrier comprising or consisting of the EM beam with non-zero OAM value $l_{10}$ of the topological charge;
-) Associating a communication channel C2, C3 to each carrier with the same frequency and co-polar to the first carrier and comprising or consisting of at least one of said additional EM beams with OAM value of the topological charge different from the OAM value of topological charge of said first EM beam, generated by the further transceiver means;
-) Placement of the first and second device in substantial alignment at a proper distance;
-) Mono or bi-directional communication on the at least two said channels C1, C2 between the first and the second device.

For substantial alignment it is meant an alignment sufficient to discriminate reception channels. For example, according to a non-limiting criterion assumed in this description, an alignment such as to allow a concatenation of the beams with non-zero OAM which allows to receive the channels with a variation of SNIR with respect to the optimal position at the given distance not lower than - 3dB.

For appropriate distance it is meant a distance between a minimum distance and a maximum distance appropriately defined, for example as a function of the transceiver means used and of the OAM beams used as carrier for the channels (array dimensions, type of antennas used, transmitted power, value of the OAM of the beams, etc), and preferably an optimal distance in which the receiving means are substantially disposed within or around the corona of maximum intensity of the intensity distribution of the corresponding transmitted OAM beam, preferably arranged along the circumference of radius $r_{max} = w\sqrt{\ell/2}$.

According to one embodiment, the step of arrangement of the first and second secure communication devices includes:

- A step of definition of the dimensions of the transceiver means of the first device and/or of the second transceiver device;
- A step of definition of the transmitted power of the transceiver means of the first and/or the second device;
- A step of definition of the region of substantial alignment between the first and the second device and/or the minimum, maximum and ideal positioning distances.

The appropriate distance and/or the region of substantial alignment can be defined as a function of the dimensions, the operating frequency, the power of the transceiver means and the values of generated/received OAM. In other embodiments the dimensions of the transceiver means can be defined in terms of preferred values of proper distance and/or proper alignment and/or transmitted power. These choices will be made by the designer on the basis of more or less stringent limits imposed by international standards and of the practical needs related to the different situations of application.

For communication on at least two said channels it is meant that at least one useful signal S1, S2, S3 is transmitted at least partially on the channel associated with the carrier comprising said first beam with non-zero OAM value, while simultaneously on said at least one further channel at least one signal is transmitted with a non-null power (not necessarily a signal carrying useful data).

Preferably, the at least one useful signal S1, S2, S3 is divided on two or more communication channels associated with carriers comprising or consisting of EM beams with different values of OAM, for example according to a composite plot of subdivision of the useful signal.

According to a further preferred aspect, it is possible to use the method of the invention to securely exchange a cryptographic key. In more detail, the at least one useful signal S1 transmitted in a secure way comprises said cryptographic key. After the exchange of the encryption key, the devices can communicate with each other in a secure way even on one or more other radio channels not necessarily carried by beams with non-zero OAM, transmitting only signals appropriately encrypted using the above encryption key transmitted/received by the method of the present invention. Preferably, the encryption key is updated after a short time such as to prevent fraudulent eavesdropper to decipher the key within that time.

It is therefore clear how the device and the system according to the invention make it possible to establish a short-range radio communication with a high security feature based on a physical substrate which uses at least two EM beams (or fields) as carriers for communication channels, at least one of which has a non-zero topological charge of OAM, and at least one of which with topological charge different from the topological charge of the first. A high security physical substrate for wireless communication is thereby established. On this substrate more existing technologies for secure communications can be applied; one can use techniques such as encryption (also quantum) or mechanisms for detecting and correcting errors as FEC (Forward Error Correction) on each channel.

In addition, with devices, systems and methods according to the invention it is possible to use a high number (even more than three, four or five, and only limited by the technology) of communication channels associated with EM beams or fields characterized by different values of OAM topological charge (therefore intrinsically orthogonal), obtaining a synergic enhancement of transmission capacity and of security of the communication.

Being able to take full advantage of such channels by splitting thereon useful signals to be transmitted, one can take full advantage of the increase in capacity obtained through the use of channels associated with beams with different OAM.

In addition, the device can be formed with different types of antenna, for example dipoles or planar antennas, both active and passive and with different arrangements: coaxial or concentric circumferential arrays, which are preferred because they second the rotational symmetry of the OAM beams, or even arrays of different shape, provided that they include antennas arranged on a closed line around the singularity of the OAM beam to be transmitted/received.

The described devices and method are also viable for applications operating at millimeter wavelengths (working frequencies around 60GHz), or infrared (Terahertz).

Although described in the context of certain embodiments and of some preferred examples of embodiment of the invention, it is intended that the scope of protection of the present patent is determined only by the following claims.

**Claims**

1. Device for secure short-range point-to-point radiocommunication, comprising:

   - first transceiver means (1110;2110;3110;4110) suitable for transmission and/or reception of a first electromagnetic EM beam with a non-zero value ($l_{10}$) of the topological charge of the Orbital Angular Momentum OAM;
   - additional transceiver means (1120;2120;3120,3130;4120,4130) suitable for transmission and/or reception of at least one second electromagnetic beam which is co-polar and isofrequential with the first beam that can be generated by the first means (1110;2110;3110;4110) and with value ($l_{20};l_{30}$) of the topological charge of the OAM different from the OAM topological charge value ($l_{10}$) of the beam transmittable and/or receivable by the first transceiver means, a first data channel (C1) being associated with a carrier comprising said first EM beam with non-zero topological charge,

   and at least one additional data channel (C2;C3) being associated with a respective carrier comprising one of said at least one second beams,
   thereby forming a high-security physical substrate preventing interception of the radiocommunication information content;
   <u>**characterized in that**</u> it is included:

   - in a security card, more particularly a credit card, cashpoint card, identification card or the like; or
   - in a reader device for a security card, more particularly a reader for a credit card, cashpoint card, identification card or the like; or
   - in a portable multimedia device, for example a smartphone or tablet, or in a reader for such a multimedia device.

2. Device according to Claim 1, **characterized in that** it is adapted to transmit and/or receive at least one useful signal (S1) on said first data channel (C1) associated with said first EM beam with non-zero value ($l_{10}$) of the topological charge and at least one signal with non-zero power on at least one of said additional channels (C2;C3).

3. Device according to the preceding claim, **characterized in that** it is adapted to transmit and/or receive at least one useful signal (Si;S1,S2,S3) divided up among the first channel (C1) and at least one of the said additional channels (C2,C3) associated with EM beams having a topological charge value of the OAM different from the value of the first channel, and/or to reconstruct at least one useful signal transmitted dived up among said first channel (C1) and at least one additional channels (C2,C3), by receiving the carriers associated to said channels (C1, C2, C3) with its respective transceiver means.

4. Device according to any claim 1-3, **characterized in that** it is included

   - in a reader device for a security card, more particularly a reader for a credit card, cashpoint card, identification card or the like; or
   - in a portable multimedia device, for example a smartphone or tablet,

   and **in that** it comprises means for easy alignment at a suitable distance from the first and at least second transceiver means, for alignment with a secure radiocommunication device.

5. Device according to the preceding claim, **characterized in that** it is included in a reader device for a security card, and **in that** said easy alignment means comprise a radio-transparent sheet, preferably with shaped raised elements suitable for defining a housing seat.

6. Device according claim 4, **characterized in that** it is included in a portable multimedia device and **in that** said easy alignment means comprises an application programmed to identify a region for alignment at a suitable distance of the transceiver means of the device with at least one channel (C1,C3) associated with an EM beam having a non-zero topological charge value of the OAM, wherein said application is preferably programmed to identify said region for alignment at a suitable distance by detecting by means of the first and/or additional transceiver means a minimum intensity point of a beam with non-zero topological charge of the OAM receivable by said first and/or additional transceiver means, and/or to display, on display means of the device, a graphics interface for assistance with the alignment at a suitable distance.

7. Device according to any one of the preceding claims, **characterized in that** said first and additional transceiver means comprise antennas, preferably passive antennas, adapted to activate only if the device receives the same signal power and/or the same signal to noise plus interference ratio (SNIR) values on all the channels (C1,C2,C3) associated with the EM beams having a different topological charge value.

8. Device according to any one of the preceding claims, **characterized in that** it comprises pre and/or post-processing means of the non re-configurable static type, preferably comprising at least one phase-shift line, preferably in the form of a microstrip, connected to at least one of said first or additional transceiver means.

9. Device according to any one of the preceding claims, **characterized in that** said first and/or additional transceiver means comprise an array of antennas arranged along a closed curve for transmission and/or reception of an EM beam with non-zero topological charge of the OAM.

10. Device according to the preceding claim, **characterized in that** said first and/or additional transceiver means comprise an array of antennas arranged equidistant along a circumference for each channel (C1;C3) to be transmitted and/or received whose carrier comprises a beam with a non-zero topological charge, said antennas of each array being at least equal to $2l+1$ in number, where $l$ is the value of said topological charge, **in that** said circular arrays are coaxial, preferably concentric, and **in that** each antenna of an array of antennas is supplied with a signal phase-shifted by $360°*l/N$ with respect to an adjacent antenna in the array, where N is the number of antennas in the array and $l$ is the topological charge value of the OAM beam to be transmitted and/or received.

11. Secure short-range radiocommunication system, **characterized in that** it comprises at least one first and one second device according to any one of the preceding claims, said first and second devices being respectively included in a security card device and in a security card reader device, or in two portable multimedia devices, or in a portable multimedia device and in a reader for such a portable multimedia device.

12. System according to the preceding Claim, wherein for radiocommunication the first and second devices are arranged in a position of substantial alignment at a suitable distance, such that the transreceiver means of one of the devices are arranged:

> - on a plane substantially orthogonal to the propagation direction z of the beam transmitted by the corresponding transreceiver means of the other device; and
> - in the vicinity of the EM field intensity maximum of the beam transmitted by the corresponding transreceiver means of the other device.

13. Short-range point-to-point mono or bi-directional radiocommunication method, comprising the steps of:

> -) providing a first and a second secure communication device, each comprising: - first transceiver means (1110;2110;3110;4110) suitable for transmission and/or reception of an electromagnetic beam with a non-zero value ($l_{10}$) of the topological charge of the OAM;
>
> > - additional transceiver means (1120;2120; 3120,3130;4120,4130) suitable for transmission and/or reception of at least one second electromagnetic (EM) beam which is co-polar and isofrequential with the first beam generated by the first means (1110;2110;3110;4110) and with a value of the topological charge of the OAM different from the topological charge value of the beam transmittable and/or receivable by the first transceiver means (1110;2110;3110;4110);
>
> -) associating a data communication channel (C1) with a first carrier comprising an EM beam with non-zero value ($l_{10}$) of the topological charge of the OAM transmittable and/or receivable by the first transceiver means (1110;2110;3110;4110);
> -) associating at least one additional data channel (C2,C3) with a carrier isofrequential and co-polar with the first carrier and comprising one of said at least on additional EM beam with value ($l_{20};l_{30}$) of the topological charge of the OAM different from the topological charge value of the OAM of said first EM beam transmittable and/or receivable by the additional transceiver means (1120;2120; 3120,3130;4120,4130), so as to provide a high security characteristic preventing interception of the information content of the information transmitted on said first and or at least one additional channel;
> Wherein said first and/or second secure communication device/s is/are included:

- in a security card, more particularly a credit card, cashpoint card, identification card or the like; or
- in a reader device for a security card, more particularly a reader for a credit card, cashpoint card, identification card or the like; or
- in a portable multimedia device, for example a smartphone or tablet, or in a reader for such a multimedia device;

-) arrangement of the first and second devices in a condition of substantial alignment and at a suitable relative distance ($d_{AB}$), preferably greater than than the wavelength ($\lambda$) of the signals transmitted;
-) unidirectional or bidirectional communication on said at least two channels (C1,C2) between the first and the second devices.

14. Method according to the preceding claim, wherein, in a position of substantial alignment at a suitable distance, the transreceiver means of one of the devices are arranged:

- on a plane substantially orthogonal to the propagation direction z of the beam transmitted by the corresponding transreceiver means of the other device; and
- in the vicinity of the EM field intensity maximum of the beam transmitted by the corresponding transreceiver means of the other device.

15. Method according to any one of the preceding claims 13-14, wherein at least one useful signal (S1,S2,S3) is transmitted on the channel (C1) associated with the carrier comprising said first beam with non-zero topological charge of the OAM and simultaneously at least one non-zero power signal is transmitted on at least one of said additional channels (C2;C3).

16. Method according to the preceding claim, **characterized in that** the at least one useful signal (Si;S1,S2,S3) is divided up into at least two separate flows, each transmitted on at least one of the at least two channels (C1,C2,C3) associated with said carriers comprising EM beams with different topological charge value of the OAM; and/or **in that** at least one useful signal (Si;S1,S2,S3) divided up into at least two separate flows, each transmitted on at least one of the at least two channels (C1,C2,C3) associated with said carriers comprising EM beams with different topological charge value of the OAM, is reconstructed by a receiving device by receiving on said at least two channels (C1,C2,C3) said at least two separate flows, and recombining them following reception thereof.

17. Method according to any one of Claims 13-16, **characterized in that** the alignment at a suitable distance of the said first and second devices is performed by assuming as a reference point for positioning the receiving means of one of the devices a minimum intensity point of the EM field generated by the corresponding transmitting means of the other device.

18. Method according to any one of Claims 13-17, **characterized in that** at least the first transceiver means of one of the two devices are arranged at a distance ($d_{AB}$) from the corresponding first transceiver means of the other device and in a position of substantial alignment such as to be arranged substantially within or around the maximum intensity ring of the intensity distribution of the beam with non-zero topological charge of the OAM transmitted by the corresponding first transceiver means, and preferably along a circumference with radius

$$r_{\max} = w_0 \sqrt{\left(1 + (z/z_R)^2\right)(\ell/2)}$$, where wo is the waist radius of the EM beam with non-zero OAM topological charge value *l* to be received.

*Fig.1*

*Fig.2a*

*Fig.2b*

*Fig.2c*

*Fig.3*

● : $I_{10} = 1$
■ : $I_{20} = 0$

*Fig.4*

● : $I_{10} = 1 \longrightarrow C_1$
■ : $I_{20} = 0 \longrightarrow C_2$

: $I_{10} = 1$

: $I_{20} = 0$

: $I_{30} = -1$

Fig.5

a)

b)

Fig.6

*a)*          *b)*     PRIOR ART

◨ = E RECEIVES

▤ = E RECEIVES AT LEAST ONE CHANNEL

▨ = E DOES NOT RECEIVE

*Fig.7*

*a)*          *b)*     PRIOR ART

◨ = E RECEIVES

▤ = E RECEIVES AT LEAST ONE CHANNEL

▨ = E DOES NOT RECEIVE

*Fig.8*

Europäisches
Patentamt
European
Patent Office
Office européen
des brevets

# EUROPEAN SEARCH REPORT

Application Number

EP 16 16 0445

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YAN YAN ET AL: "High-capacity millimetre-wave communications with orbital angular momentum multiplexing", NATURE COMMUNICATIONS, vol. 5, 16 September 2014 (2014-09-16), page 4876, XP055141889, DOI: 10.1038/ncomms5876 * abstract * * page 2 - page 4 * * figures 1, 2 * | 1-18 | INV. H04L5/04 ADD. H04B5/00 |
| A | MARI ELETTRA ET AL: "Near-Field Experimental Verification of Separation of OAM Channels", IEEE ANTENNAS AND WIRELESS PROPAGATION LETTERS, vol. 14, 11 November 2014 (2014-11-11), pages 556-558, XP011572601, ISSN: 1536-1225, DOI: 10.1109/LAWP.2014.2369536 [retrieved on 2015-02-05] * page 557, left-hand column, line 11 - page 558, right-hand column, line 14 * | 1-18 | |
| A | WO 2014/104911 A1 (HUAWEI TECH CO LTD [CN]; DUDOROV SERGEY NIKOLAEVICH [CN]; ZENG YANXING) 3 July 2014 (2014-07-03) * page 8, line 29 - page 14, line 2 * * figures 2, 3 * | 1-18 | TECHNICAL FIELDS SEARCHED (IPC) H04L H04B G06K H01Q |

The present search report has been drawn up for all claims

| Place of search | Date of completion of the search | Examiner |
|---|---|---|
| The Hague | 11 August 2016 | Marselli, Marco |

EPO FORM 1503 03.82 (P04C01)

## ANNEX TO THE EUROPEAN SEARCH REPORT
## ON EUROPEAN PATENT APPLICATION NO.

EP 16 16 0445

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2016

| Patent document cited in search report | Publication date | Patent family member(s) | Publication date |
|---|---|---|---|
| WO 2014104911 A1 | 03-07-2014 | CN 104885302 A<br>EP 2951889 A1<br>US 2015372398 A1<br>WO 2014104911 A1 | 02-09-2015<br>09-12-2015<br>24-12-2015<br>03-07-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014104911 A

- US 7701381 B2

**Non-patent literature cited in the description**

- **YAN YAN et al.** High-capacity millimetre-wave communications with orbital angular momentum multiplexing. *NATURE COMMUNICATIONS,* 16 September 2014, vol. 5, 4876